(19) Europäisches Patentamt
European Patent Office
Office européen des brevets

(11) EP 2 233 811 A2

(12) **EUROPÄISCHE PATENTANMELDUNG**

(43) Veröffentlichungstag:
29.09.2010 Patentblatt 2010/39

(51) Int Cl.:
*F16L 9/12* (2006.01)

(21) Anmeldenummer: 10003156.6

(22) Anmeldetag: 24.03.2010

(84) Benannte Vertragsstaaten:
AT BE BG CH CY CZ DE DK EE ES FI FR GB GR HR HU IE IS IT LI LT LU LV MC MK MT NL NO PL PT RO SE SI SK SM TR
Benannte Erstreckungsstaaten:
AL BA ME RS

(30) Priorität: 24.03.2009 DE 102009014534

(71) Anmelder: Poloplast GmbH & Co. KG
4060 Leonding (AT)

(72) Erfinder:
• Mayrbäurl, Erwin Werner, Dipl.-Ing.
4481 Asten (AT)
• Miethlinger, Jürgen Karl, Dr.
4851 Gampern (AT)

(74) Vertreter: Schaeberle, Steffen
Hoefer & Partner
Patentanwälte
Pilgersheimer Strasse 20
81543 München (DE)

(54) **Kunststoffrohr**

(57) Die Erfindung bezieht sich auf ein starres Kunststoffrohr aus thermoplastischem Material mit zumindest drei Schichten, wobei eine Mittelschicht (1) vorgesehen ist, an welcher zumindest eine radial außenliegende, mit Kurzfaser verstärkten Verstärkungsmaterialien verstärkte erste Verstärkungsschicht (2) und zumindest eine radial innenliegende, mit Kurzfaser verstärkten Verstärkungsmaterialien verstärkte zweite Verstärkungsschicht (3) angrenzen, wobei die thermoplastischen Verstärkungsschichten ungerichtete Fasern aufweisen und im Extrusionsprozess aufgebracht sind.

Fig. 1

EP 2 233 811 A2

**Beschreibung**

Die Erfindung bezieht sich auf ein mehrschichtiges Kunststoffrohr. Im Einzelnen bezieht sich die Erfindung auf ein Kunststoffrohr, welches mehrlagig ausgebildet und mit zumindest einer Verstärkungsschicht versehen ist.

Aus dem Stand der Technik ist es bekannt, bei Kunststoffrohren, welche beispielsweise extrudiert oder spritzgegossen sind, eine faserverstärkte Schicht vorzusehen. So zeigt beispielsweise die DE 10 2004 010 340 B4 ein Kunststoffrohr, welches dreischichtig aufgebaut ist. Zwischen einer Außenschicht und einer Innenschicht ist eine faserverstärkte Schicht angeordnet. Eine ähnliche Konstruktion zeigen auch die DE 100 18 324 C2 oder die DE 10 2007 035 657 A1.

Allgemein weisen die aus dem Stand der Technik bekannten Kunststoffrohre eine hohe chemische Beständigkeit auf, sie besitzen jedoch den Nachteil einer im Vergleich zu Metallen geringen Eigensteifigkeit und einer großen Längenausdehnung unter Temperatureinfluss. Aus diesem Grunde hat man im Stand der Technik vorgeschlagen, den Kern des Rohres mit Fasern zu verstärken, um diese Nachteile auszugleichen. Der die Mittelschicht bildende Kern ist dann mit einer Innenschicht und einer Außenschicht belegt, die beispielsweise einen UV-Schutz gewährleistet, eine ausreichende mechanische Festigkeit aufweist oder gegen die durchzuleitenden Medien resistent ist.

Es hat sich in der Praxis jedoch gezeigt, dass eine Faserverstärkung des Kerns des Rohres die Steifigkeit des Rohres nur unwesentlich erhöht. Dieses neigt bei Belastung (Fluidfüllung) weiterhin zur Durchbiegung und erfordert somit, insbesondere bei einer horizontalen Montage, eine Vielzahl von Befestigungspunkten.

Aus der AT 316 228 B ist ein Kunststoffrohr mit einer Faserarmierung bekannt, bei welchem auf einem Innenliner eine Duroplastschicht aufgebracht ist, in welcher eine Faserarmierung eingebettet ist. Die Faserarmierung ist schlauchartig oder gestrickt und weist somit sehr lange Fasern auf. Eine derartige Ausgestaltung ist aufwendig in der Herstellung und erfordert erhebliche Maßnahmen, um in der verstärkten Außenschicht eine definierte Festigkeit zu erzeugen.

Die AT 360 286 B beschreibt ein Rohr aus duroplastischem Harz mit einer oder mehreren Verstärkungsschichten, wobei die Verstärkungsschichten eine Kombination aus harzimprägnierten Glasfaserbändern und Stahlkorden aufweist, die in einer Verstärkungsschicht gleichgerichtet sind. Es wird somit auf den Außenumfang des Rohres ein Gewebe aufgelegt, welches die gewünschten Verstärkungseigenschaften haben soll.

Der Erfindung liegt die Aufgabe zugrunde, ein Kunststoffrohr der eingangs genannten Art zu schaffen, welches bei einfachem Aufbau und einfacher, kostengünstiger Herstellbarkeit eine hohe Verformungsbeständigkeit aufweist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, nicht den Kern des aus einem thermoplastischen Material gefertigten Rohres zu verstärken, sondern diesen unverstärkt zu lassen. Der Kern des Rohres, welcher in der neutralen Faser liegt, wird somit nicht verstärkt und kann aus einem üblichen Material, beispielsweise einem Polymer, gefertigt werden. Angrenzend an diese Mittelschicht weist das erfindungsgemäße Kunststoffrohr jeweils eine faserverstärkte Schicht auf. Diese Verstärkungsschichten liegen somit außerhalb der neutralen Faser und sind hinsichtlich der axialen Stabilität des Kunststoffrohrs besonders wirksam. Die Verstärkungsschichten wirken somit einer Durchbiegung des Rohres bei Füllung mit Fluid wirkungsvoll entgegen. Die Verstärkung erfolgt erfindungsgemäß mittels Kurzfasern, welche in das Material der Verstärkungsschicht eingebettet sind. Das erfindungsgemäße Rohr wird mittels eines Extrusionsprozesses koextrudiert.

Erfindungsgemäß ist vorgesehen, dass die beiden Verstärkungsschichten mit einer Außenschicht bzw. einer Innenschicht abgedeckt werden können, welche chemisch resistent sind, welche mit Additiven versehen sein können und welche die ausreichenden mechanischen Festigkeitswerte aufweisen können.

Das erfindungsgemäße Rohr zeichnet sich durch eine Reihe erheblicher Vorteile aus.

Das Kunststoffrohr ist insbesondere im Leitungsbereich für Gase und Flüssigkeiten besonders vorteilhaft einsetzbar und ist insbesondere auch überputz montierbar, da die große Festigkeit gegen Durchbiegung und die große Kriechfestigkeit nur eine relativ geringe Anzahl an Befestigungen (Befestigungspunkten) erfordern. Der axiale Durchhang ist somit weitgehend vermieden, das erfindungsgemäße Kunststoffrohr ist sehr steif und weist ein hohes Trägheitsmoment auf.

Erfindungsgemäß ist es möglich, die beiden Verstärkungsschichten mit üblichen Mineral- oder Kurzglasfaserverstärkungen zu versehen.

Weiterhin erweist es sich als vorteilhaft, dass die Dicken der beiden Verstärkungsschichten nur sehr gering sein brauchen, so dass das erfindungsgemäße Kunststoffrohr sehr kostengünstig herstellbar ist.

Bei Betrachtung eines inkrementellen Teils des Rohres ergibt sich somit eine starke Erhöhung der Steifigkeit bei Einsatz einer minimalen Menge an Verstärkungsmaterialien.

Erfindungsgemäß ist die Mittelschicht bevorzugterweise im Bereich der neutralen Faser des Rohres angeordnet und/oder parallel zur neutralen Faser ausgerichtet.

Die Verstärkungsmaterialien sind bevorzugterweise in einem Anteil von kleiner als 30 Gew.-% des Gesamtgewichts des Rohres vorhanden. Dies führt zu einer erheblichen Kostensenkung und Gewichtsreduzierung, insbesondere im Vergleich mit den aus dem Stand der Technik bekannten Konstruktionen, bei denen der Faseranteil der verstärkten Mittelschicht 55 bis 75 Gew.-%, entsprechend 30 bis 50 Vol.-%, betragen kann.

Erfindungsgemäß kann die Dicke der Mittelschicht des Rohres zwischen 10 und 70 % der Gesamtdicke der Wandung des Rohres umfassen. Bei einem geringeren Anteil als 10 % kann keine ausreichende Beabstandung der Verstärkungsschichten erzielt werden, während ein höherer Anteil als 70 % zu wenig Dickenanteil für die Verstärkungsschichten zur Verfügung stellt. Vorteilhafterweise liegt der Dickenanteil der Mittelschicht zwischen 20 und 40 % der Gesamtdicke der Rohrwandung.

Als Verstärkungsmaterialien werden bevorzugter Weise Kurzglasfasern mit einer Länge zwischen 3 mm und 5 mm eingesetzt. Bei einer Aufbringung der Faserschichten im Koextrusionsprozess, werden die Fasern nur minimal in Extrusionsrichtung orientiert. Durch die großteils ungerichtete Faserverteilung, wird das Rohr nicht nur axial, sondern auch am Umfang verstärkt. Diese Umfangsverstärkung erhöht die Ringsteifigkeit wesentlich, wodurch der Widerstand des Rohres gegenüber radialen Verformungen wesentlich erhöht wird.

In günstiger Weiterbildung der Erfindung kann vorgesehen werden, dass zwischen den einzelnen Schichten oder zwischen einzelnen der Schichten des Rohres ein Haftvermittler vorgesehen ist. Weiterhin kann es günstig sein, wenn eine vorhandene Außenschicht oder Innenschicht mit Additiven versehen oder mit Ausrüstungen ausgestattet ist, welche die Gas- oder Fluiddichtigkeit, die Umweltresistenz, die mechanischen Festigkeitswerte und/oder das optische Erscheinungsbild verbessert. Derartige Funktionsadditive oder Funktionen sind aus dem Stand der Technik bekannt. Sie können weiterhin Barriereeigenschaften, Flammschutz, Hygieneanforderungen hinsichtlich Mikroorganismen oder optische Eigenschaften hinsichtlich der Kennzeichnung haben.

Erfindungsgemäß können als Basispolymer für die einzelnen Schichten gleiche, aber auch unterschiedliche Kunststoffe verwendet werden. Diese stammen vorzugsweise aus der Gruppe der Thermoplaste. Innerhalb der einzelnen Werkstoffgruppen der Schichten können gleiche oder unterschiedliche Werkstoffe verwendet werden. Polymere, die besonders zur Verwendung bei dem erfindungsgemäßen Kunststoffrohr geeignet sind, sind PP, HDPE, LDPE, PVC, ABS oder PA.

Neben verschiedenen Basispolymeren können für die Verstärkungsschichten gleiche oder andere Basispolymere gewählt werden, ebenso sind verschiedene Verstärkungsstoffe in vorteilhafter Weise einsetzbar.

Die beiden Verstärkungsschichten können erfindungsgemäß die gleichen, aber auch unterschiedliche Verstärkungsmaterialien in der Kunststoffmatrix aufweisen. Als Verstärkungsstoffe sind beispielsweise kurzfaserförmige Verstärkungsstoffe wie Glasfasern, Kohlefasern, Aramidfasern oder Naturfasern, wie etwa Flachs, vorteilhaft.

Weiter ist es erfindungsgemäß möglich, einzelne der Schichten, vorzugsweise jedoch die Mittelschicht geschäumt auszuführen, um zusätzlich Material und Gewicht zu sparen und die Kosten zu senken.

Durch Vernetzen der Kunststoffe in einer oder mehreren Schichten des Rohres können die Eigenschaften, insbesondere hinsichtlich der Festigkeit und Temperaturtestbeständigkeit verbessert werden.

Durch das Einbringen von metallischen Partikeln oder Partikeln, die durch ein induktives Feld mit Temperaturerhöhung reagieren, ist es möglich, das Rohr mit Kunststoffteilen zu verbinden, z. B. durch Schweißen.

Im Folgenden wird die Erfindung anhand eines Ausführungsbeispiels in Verbindung mit der Zeichnung beschrieben. Dabei zeigt:

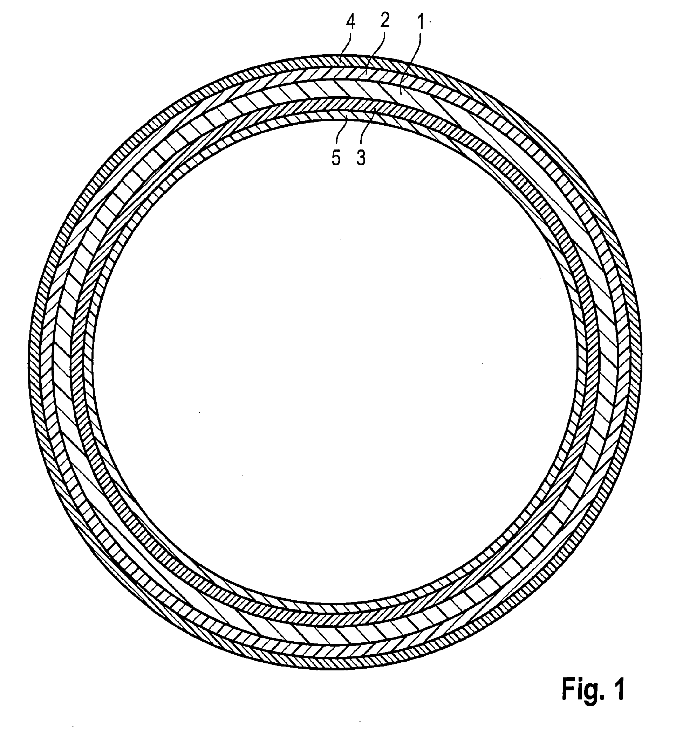

Fig. 1     eine Radial-Schnittansicht eines erfindungsgemäßen Rohres,

Fig. 2     eine Teil-Schnittansicht als inkrementelles Rohrstück,

Fig. 3     eine Ansicht, analog Fig. 2, eines Aufbaus gemäß dem Stand der Technik, und

Fig. 4     eine Darstellung der Mechanik der Biegefestigkeit und der neutralen Faser.

Das erfindungsgemäße Rohr umfasst eine Mittelschicht 1, an welche sich radial außenliegend eine erste Verstärkungsschicht 2 und radial innenliegend eine zweite Verstärkungsschicht 3 anschließen. Die beiden Verstärkungsschichten 2 und 3 sind somit durch die Mittelschicht 1 beabstandet. Radial außen kann eine Außenschicht 4, radial innen kann eine Innenschicht 5 aufgebracht sein. Das erfindungsgemäße Rohr ist somit zumindest dreilagig, in bevorzugter Weiterbildung fünflagig ausgebildet. Das Ausführungsbeispiel bezieht sich auf eine fünflagige Ausgestaltung mit Außenschicht 4 und Innenschicht 5. Diese sind jedoch für den Erfindungsgedanken nicht wesentlich, so dass das Ausführungsbeispiel nicht einschränkend ist.

Es versteht sich, dass die dargestellten Dickenverhältnisse nur zu Zwecken der verdeutlichenden Darstellung gewählt wurden.

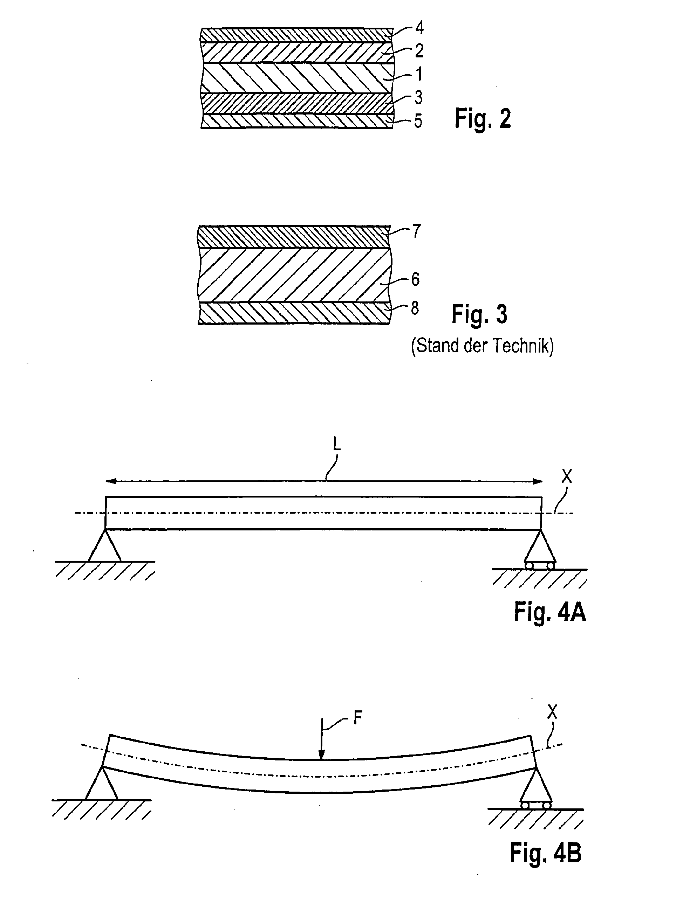

Die Fig. 2 zeigt nochmals eine Schnittdarstellung, aus welcher sich der erfindungsgemäße Schichtaufbau ergibt. Dies verdeutlicht den Unterschied zum Stand der Technik, der in Fig. 3 dargestellt ist. Dort ist eine sehr dicke Mittelschicht 6 ausgebildet, die das eigentliche Rohrvolumen ausmacht und die durch eine relativ dünne Außenschicht 7 und eine relativ dünne Innenschicht 8 abgedeckt ist. Die Außenschicht 7 und die Innenschicht 8 dienen im Wesentlichen nicht der Verstärkung oder Versteifung, sondern lediglich der Funktionserfüllung hinsichtlich Chemikalienbeständigkeit, Gasdichtigkeit, Fluiddichtigkeit, mechanischer Festigkeit, etc. Die Fig. 4 zeigt in der Verdeutlichung die Lage der neutralen Faser X, welche sich in Längsrichtung L des Rohres erstreckt. Bei Einwirkung einer Kraft F verbleibt die neutrale Faser im Wesentlichen neutral, sie wird nicht gedehnt und trägt somit im Hinblick auf die erfindungsgemäß beschriebene Konstruktion nichts zur Festigkeit oder Steifigkeit des Rohres bei. Hieraus wird deutlich, dass die beiden durch die in der neutralen Faser liegende Mittelschicht beabstandeten Verstärkungsschichten die Verstärkung und Versteifung des Rohres bewirken.

Durch die erfindungsgemäße Konstruktion kann die Biegesteifigkeit des erfindungsgemäßen Kunststoffrohrs im Vergleich zu Stand der Technik um mehr als 20 % erhöht werden. Die Gesamtrohrdicke bzw. die Gesamtmenge an Verstärkungsmaterialien brauchen hierfür nicht erhöht werden.

Weiterhin ist die Erfindung nicht auf einfache Rohre beschränkt, vielmehr können auch Rohrelemente, wie Winkelstücke, Abzweigungselement oder Ähnliches in erfindungsgemäßer Weise ausgebildet werden.

Insgesamt ergibt sich durch den erfindungsgemäßen Rohraufbau eine hohe Steifigkeit, bei gleichzeitig geringerem Einsatz von Verstärkungsmaterial. Die Verstärkungsschichten können erfindungsgemäß wirkungsvoll durch eine Außenschicht und/ oder eine Innenschicht geschützt werden.

Im Folgenden wird rechnerisch ein Beispiel eines erfindungsgemäßen Rohres im Vergleich zum Stand der Technik in Verbindung mit den Fig. 2 und 3 berechnet:

Breite: 50mm
Gesamthöhe (entsprecht der Rohrwanddicke): 10mm
(im Fall 1 (Stand der Technik lt. Figur 2) erfolgt die Aufteilung:
2,5; 5 und 2,5mm Dicke der einzelnen Schichten;
im Fall 2 (Figur 3): 1,5; 2,5; 2,0; 2,5 und 1,5mm Schichtdicke)
E-Modul Kunststoffschichten: 1000 N/mm$^2$
E-Modul Verstärkungsschichten: 3000 N/mm$^2$

Die Biegesteifigkeit des Verbundes ergibt sich aus der Summe der Biegesteifigkeiten, welche wiederum das Produkt aus Trägheitsmoment und E-Modul darstellt.

Beim Trägheitsmoment gilt für beabstandete Schichten der Satz von Steiner, wonach sich das Trägheitsmoment wie folgt errechnet:

$$I_i = \frac{b*h^3}{12} + a^2 * A$$

| | E [N/mm$^2$] | I [mm$^4$] | Biegesteifigkeit [N mm$^2$] | | b | h | a |
|---|---|---|---|---|---|---|---|
| | | | | | | | |
| Schicht A | 1 000,00 | 1 822,92 | 1 822 916,67 | | 50 | 2,5 | 3,75 |
| Schicht B | 3 000,00 | 520,83 | 1 562 500,00 | | 50 | 5 | 0 |
| Schicht A | 1 000,00 | 1 822,92 | 1 822 916,67 | | 50 | 2,5 | 3,75 |
| | | | **5 208 333,33** | | | | |
| | | | | | | | |
| | | | | | | | |
| Schicht 21 | 1 000,00 | 1 368,75 | 1 368 750,00 | | 50 | 1,5 | 4,25 |
| Schicht 31 | 3000,00 | 697,92 | 2093750,00 | | 50 | 2,5 | 2,25 |
| Schicht 22 | 1 000,00 | 33,33 | 33333,33 | | 50 | 2 | 0 |
| Schicht 32 | 3000,00 | 697,92 | 2093750,00 | | 50 | 2,5 | 2,25 |

(fortgesetzt)

| | E [N/mm$^2$] | I [mm$^4$] | Biegesteifigkeit [N mm$^2$] | | b | h | a |
|---|---|---|---|---|---|---|---|
| Schicht 23 | 1 000,00 | 1 368,75 | 1 368 750,00 | | 50 | 1,5 | 4,25 |
| | | | **6 958 333,33** | | | | |

Im ersten Fall ergibt sich für die Biegesteifigkeit: 5 208 333 Nmm$^2$, im zweiten Fall mit einem erfindungsgemäßen Rohraufbau bei gleichem Materialeinsatz: 6 958 333 Nmm$^2$, was einer Erhöhung um nahezu 35% entspricht.

**Patentansprüche**

1. Starres Kunststoffrohr aus thermoplastischem Material mit zumindest drei Schichten, wobei eine Mittelschicht (1) vorgesehen ist, an welcher zumindest eine radial außenliegende, mit Kurzfaser verstärkten Verstärkungsmaterialien verstärkte erste Verstärkungsschicht (2) und zumindest eine radial innenliegende, mit Kurzfaser verstärkten Verstärkungsmaterialien verstärkte zweite Verstärkungsschicht (3) angrenzen, wobei die thermoplastischen Verstärkungsschichten ungerichtete Fasern aufweisen und im Extrusionsprozess aufgebracht sind.

2. Kunststoffrohr nach Anspruch 1, **dadurch gekennzeichnet, dass** die Mittelschicht (1) im Bereich der neutralen Faser des Rohrs angeordnet ist.

3. Kunststoffrohr nach Anspruch 1 oder 2, **dadurch gekennzeichnet, dass** die Verstärkungsmaterialien in der ersten (2) und der zweiten (3) Verstärkungsschicht in einem Anteil von kleiner als 30 Gew.-% des Gesamtgewichts des Rohrs vorliegen.

4. Kunststoffrohr nach einem der Ansprüche 1 bis 3, **dadurch gekennzeichnet, dass** die Dicke der Mittelschicht des Rohrs (10) bis 70 % der Gesamtdicke der Wandung des Rohrs umfasst.

5. Kunststoffrohr nach einem der Ansprüche 1 bis 3, **dadurch gekennzeichnet, dass** die Dicke der Mittelschicht des Rohrs (10) bis 20 bis 40 % der Gesamtdicke der Wandung des Rohrs umfasst.

6. Kunststoffrohr nach einem der Ansprüche 1 bis 5, **dadurch gekennzeichnet, dass** die Verstärkungsmaterialien faserförmig ausgebildet sind.

7. Kunststoffrohr nach einem der Ansprüche 1 bis 6, **dadurch gekennzeichnet, dass** die Verstärkungsschichten von einer Deckschicht abgedeckt sind.

8. Kunststoffrohr nach einem der Ansprüche 1 bis 7, **dadurch gekennzeichnet, dass** der Anteil der Verstärkungsmaterialien 10 bis 30 Gew.-% beträgt.

9. Kunststoffrohr nach einem der Ansprüche 1 bis 8, **dadurch gekennzeichnet, dass** zwischen zumindest einzelnen der Schichten des Rohrs ein Haftvermittler vorgesehen ist.

10. Kunststoffrohr nach einem der Ansprüche 1 bis 9, **dadurch gekennzeichnet, dass** zumindest eine der Schichten des Rohrs geschäumt ausgebildet ist.

11. Kunststoffrohr nach einem der Ansprüche 1 bis 10, **dadurch gekennzeichnet, dass** ein gleiches Basispolymer für die Schichten verwendet wird.

12. Kunststoffrohr nach einem der Ansprüche 1 bis 10, **dadurch gekennzeichnet, dass** ein unterschiedliches Basispolymer für die Schichten verwendet wird.

Fig. 1

Fig. 2

Fig. 3

(Stand der Technik)

Fig. 4A

Fig. 4B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004010340 B4
- DE 10018324 C2
- DE 102007035657 A1
- AT 316228 B
- AT 360286 B